# EUROPÄISCHE PATENTSCHRIFT

(11) **EP 2 776 347 B1**
(45) Veröffentlichungstag und Bekanntmachung des Hinweises auf die Patenterteilung: **20.07.2016**
(21) Anmeldenummer: 12786932.9
(22) Anmeldetag: 07.11.2012
(51) Int. Cl.: B65G 15/14, B65G 51/02, B65G 51/03

(54) **BESCHICKUNGSVORRICHTUNG FÜR BEHÄLTERVERSCHLÜSSE**
FEEDING DEVICE FOR CONTAINER CLOSURES
DISPOSITIF D'ALIMENTATION POUR FERMETURES DE CONTENANT

(30) Priorität: 08.11.2011 AT 6092011
(43) Veröffentlichungstag der Anmeldung: 17.09.2014
(73) Patentinhaber: Gassner GmbH, 4890 Frankenmarkt (AT)
(72) Erfinder: GASSNER, Wolfgang, A-4890 Frankenmarkt (AT)
(74) Vertreter: KLIMENT & HENHAPEL
(86) Internationale Anmeldenummer: PCT/EP2012/071996
(87) Internationale Veröffentlichungsnummer: WO 2013/068381

(56) Entgegenhaltungen:
- EP-A2- 1 803 681
- WO-A2-2007/028627
- WO-A2-2008/024613
- BE-A1- 816 112
- DE-A1- 3 515 754
- DE-A1- 10 307 601
- FR-A1- 2 876 990
- FR-A1- 2 961 801
- GB-A- 1 209 578
- US-A- 2 952 104
- US-A1- 2009 151 305
- US-B1- 6 533 504

## Beschreibung

### GEBIET DER ERFINDUNG

Die vorliegende Erfindung bezieht sich auf einen Förderabschnitt in einer Vorrichtung zum Vereinzeln und Lageausrichten von Behälterverschlüssen sowie zum Befördern der Behälterverschlüsse zu einer Weiterverarbeitungsmaschine, vorzugsweise Verschließmaschine, umfassend eine Förderoberfläche, einen Steilförderabschnitt, einen Übergangsabschnitt mit einem Anfangs-, Mittel- und Endbereich sowie einen Flachförderabschnitt, wobei der Steilförderabschnitt als Förderkanal ausgeführt ist und mit der horizontalen Ebene einen Winkel von mindestens 30°, vorzugsweise mindestens 80°, besonders bevorzugt im Wesentlichen 90° einschließt, wobei die Behälterverschlüsse mittels eines Antriebs der in einer Förderrichtung gesehen vor dem Förderkanal angeordnet ist, durch den Förderkanal bis in den Übergangsabschnitt, vorzugsweise bis in den Mittelbereich des Übergangsabschnitts schiebbar bzw. drückbar sind.

### STAND DER TECHNIK

Solche Vorrichtungen kommen in Behälterabfüllbetrieben zum Einsatz und dienen der exakten Zuführung der Behälterversverschlüsse zu einer Verschließmaschine, welche die Behälterverschlüsse an den Behältern befestigt, um diese zu verschließen.

Während frühere Vorrichtungen dieser Art nahezu zur Gänze oberhalb der Verschließmaschine angeordnet waren, wodurch die Vereinzelung und das Lageausrichten der Behälterverschlüsse praktisch direkt oberhalb der geöffneten, zu verschließenden Behälter stattgefunden hat, ist man in jüngerer Zeit dazu übergegangen, die Vereinzelung und das Lageausrichten der Behälterverschlüsse abseits der Verschließmaschine durchzuführen, wodurch der bei der Manipulation der Behälterverschlüsse unweigerlich entstehende Abrieb und Staub von den offenen Behältern ferngehalten wird.

Dies führte dazu, dass die bereits vereinzelten und lageausgerichteten Behälterverschlüsse über eine mehr oder weniger lange Distanz zur Verschließmaschine befördert werden müssen, wobei die Behälterverschlüsse der Verschließmaschine in der Regel von oben zugeführt werden, sodass die Behälterverschlüsse nicht nur über eine horizontale Distanz befördert werden müssen, sondern auch über eine vertikale Distanz. Übliche Vorrichtungen sind daher so aufgebaut, dass die Behälterverschlüsse am Ort der Aufgabe als unsortiertes bzw. lediglich vorsortiertes Schüttgut zuerst in eine gewisse Höhe transportiert werden und die horizontale Beförderung dann in dieser Höhe zur Verschließmaschine erfolgt. Dies hat den Vorteil, dass die Aufstandsebene der Vorrichtung als solches sehr klein gehalten werden kann und die horizontale Beförderung der Behälterverschlüsse in der Höhe (übliche Höhen sind in etwas 3 m bis 6 m) keine wertvolle Standfläche für andere Maschinen belegt, da der unterhalb des in der Höhe verlaufenden Förderweges vorhandene Platz anderweitig genutzt werden kann.

Aus der AT 10 979 U1 ist eine Vorrichtung für metallische Behälterverschlüsse, nämlich Kronkorken, bekannt, bei welcher unmittelbar nach einer Übergabestation eine Fördereinheit angeordnet ist, wobei in der Übergabestation die Vereinzelung und Lageorientierung der Behälterverschlüsse sowie die Übergabe auf die Fördereinheit stattfindet. Die Fördereinheit schließt dabei mit einem Steilförderabschnitt an die Übergabestation an, welcher eine von der Aufstandsebene der Vorrichtung wegweisende Förderrichtungskomponente aufweist.

Problematisch ist jedoch die Art des Transports der vereinzelten und lageorientierten Behälterverschlüsse in vertikaler Richtung bzw. mit vertikalem Richtungsanteil. Bei metallischen Behälterverschlüssen kann dies unter Ausnutzung magnetischer Komponenten erfolgen. Dies funktioniert aber naturgemäß nicht bei nicht-metallischen Behälterverschlüssen.

Insbesondere wenn die Vorrichtung universell, also auch für Behälterverschlüsse aus nicht-ferromagnetischen Werkstoffen wie beispielsweise Schraubverschlüsse aus Aluminium oder Plastik, einsetzbar sein soll, bietet sich für den Behälterverschlüsse-Transport mit vertikalem Richtungsanteil grundsätzlich Druckluft an. Um den Platzbedarf der Vorrichtung gering zu halten, sollen dabei möglichst steile Steilförderabschnitte, deren Winkel mit der Aufstandsfläche möglichst nahe an 90° liegt, verwendet werden. Allerdings steigt der Druckluftbedarf mit der Steilheit des Steilförderabschnitts stark an, weshalb sich ein wirklich geringer Platzbedarf nur mit unökonomisch hohem Druckluftverbrauch realisieren lässt.

Hohe Druckluft-Drücke bzw. Mengen (Volumina) bringen außerdem unweigerlich starke Luftverwirbelungen mit sich. Dies ist ebenfalls als nachteilig zu werten, insbesondere in Hinblick auf die geforderte Keimfreiheit der Behälterverschlüsse bzw. auf das keimfreie Abfüllen und Verschließen der Behälter.

Zudem führt die große Energie, die den Behälterverschlüssen zuteil wird, bei einer Umlenkung vom Steilförderabschnitt in die Horizontale zu starker Reibung bzw. starkem Abrieb. Bei Behälterverschlüssen aus Kunststoff kann dies neben Kratzspuren zum Aufschmelzen der Oberfläche führen.

Aus der US 2952104 A ist eine gattungsgemäße Vorrichtung zur Zuführung von Verschlüssen zu einer Verschließmaschine bekannt. Hierbei werden die Verschlüsse durch einen Förderabschnitt befördert. Dieser weist einen Steilförderabschnitt auf, wobei der Förderabschnitt in diesem Bereich eine Kanalform hat, die sich aus parallel angeordneten Stäben ergibt. Die Stäbe bilden im steilen Abschnitt des Förderabschnitts eine Art geschlossenen Käfig, sodass kein Verschluss herausfallen kann. Die Verschlüsse werden mittels einer druckluftbetätigten Andrückstange, die in Förderrichtung vor dem Förderabschnitt angeordnet ist, durch den Förderabschnitt bis zu einem Ausgabeende gedrückt.

### AUFGABE DER ERFINDUNG

Aufgabe der Erfindung ist es daher, einen Förderabschnitt für metallische und nicht-metallische Behälterverschlüsse zur Verfügung zu stellen, welcher einerseits einen möglichst geringen Platzbedarf bzw. Bedarf an Aufstandsfläche aufweist und andererseits ohne hohen Druckluftverbrauch auskommt. D.h. die Behälterverschlüsse sollen rasch, schonend und ohne hohen Energieeinsatz auf relativ große Höhen transportiert werden, wobei Luftverwirbelungen zu vermeiden sind.

### DARSTELLUNG DER ERFINDUNG

Erfindungsgemäß wird ein kompakter Förderabschnitt mit steil stehendem Steilförderabschnitt ohne hohen Druckluftverbrauch und/oder Luftverwirbelungen realisiert, indem die sich auf einer Förderoberfläche bewegenden Behälterverschlüsse von unten durch den Steilförderabschnitt hindurch gedrückt werden.

Hierzu ist der Steilförderabschnitt als Förderkanal ausgebildet, sodass die Behälterverschlüsse nicht in einer Richtung normal auf eine Förderrichtung aus dem Steilförderabschnitt herunter fallen können. Die Behälter werden in einem Abschnitt vor dem Steilförderabschnitt mittels eines Antriebs in den Steilförderabschnitt gedrückt bzw. werden die Behälterverschlüsse gegen bereits im Steilförderabschnitt befindliche Behälterverschlüsse geschoben. Somit drücken ständig neue Behälterverschlüsse gegen bereits im Steilförderabschnitt befindliche Behälterverschlüsse, wodurch letztere den Steilförderabschnitt hoch transportiert werden. Daher ist es bei einem Förderabschnitt in einer Vorrichtung zum Vereinzeln und Lageausrichten von Behälterverschlüssen sowie zum Befördern der Behälterverschlüsse zu einer Weiterverarbeitungsmaschine, vorzugsweise Verschließmaschine, umfassend eine Förderoberfläche, einen Steilförderabschnitt, einen Übergangsabschnitt mit einem Anfangs-, Mittel- und Endbereich sowie einen Flachförderabschnitt, erfindungsgemäß vorgesehen, dass der Steilförderabschnitt als Förderkanal ausgeführt ist und mit der horizontalen Ebene einen Winkel von mindestens 30°, vorzugsweise mindestens 80°, besonders bevorzugt im Wesentlichen 90° einschließt, wobei die Behälterverschlüsse mittels eines Antriebs der in einer Förderrichtung gesehen vor dem Förderkanal angeordnet ist, durch den Förderkanal bis in den Übergangsabschnitt, vorzugsweise bis in den Mittelbereich des Übergangsabschnitts schiebbar bzw. drückbar sind.

D.h. an den Steilförderabschnitt schließt ein Übergangsabschnitt mit dessen Anfangsbereich an. Der Übergangsabschnitt schließt außerdem an einen Flachförderabschnitt an. Der Übergangsabschnitt führt die Behälterverschlüsse aus dem steil stehenden Steilförderabschnitt in den flachen, vorzugsweise horizontalen Flachförderabschnitt über. Hierbei ist insbesondere ein Mittelbereich des Übergangsabschnitts gekrümmt, sodass sich die Orientierung der Förderoberfläche dort kontinuierlich ändert. Entsprechend ist es bei einer bevorzugten Ausführungsform des Förderabschnitts vorgesehen, dass der Steilförderabschnitt an den Anfangsbereich des Übergangsabschnitts anschließt, und dass der Flachförderabschnitt an den Endbereich des Übergangsabschnitts anschließt, wobei der Flachförderabschnitt vorzugsweise im Wesentlichen parallel zur horizontalen Ebene verläuft und die Behälterverschlüsse entsprechend dem weiteren Aufbau der Vorrichtung zu anderen Abschnitten weiterbefördert. Ebenso ist es bei einer besonders bevorzugten Ausführungsform des Förderabschnitts vorgesehen, dass sich die Orientierung der Förderoberfläche im Mittelbereich des Übergangsabschnitts kontinuierlich ändert.

Sobald die Förderrichtung nur noch eine geringe Komponente gegen die Schwerkraft aufweist, d.h. sobald der Winkel zwischen Förderrichtung und der horizontalen Ebene hinreichend klein ist, kann wieder mittels Druckluft weiterbefördert werden, ohne dass hierfür eine besonders große Menge an Druckluft aufgewendet werden müsste. Ebenso ist der notwendige Druck begrenzt. Durch beides werden Luftverwirbelungen vermieden und die Verschlüsse geschont. Um einen kontinuierlichen Übergang zwischen dem Drücken der Behälterverschlüsse durch den Förderkanal und dem Weitertransport mit Druckluft im Flachförderabschnitt zu gewährleisten, ist es bei einer bevorzugten Ausführungsform des Förderabschnitts vorgesehen, dass die Behälterverschlüsse im Übergangsabschnitt, vorzugsweise im Mittelbereich und im Endbereich, sowie im darauf folgenden Flachförderabschnitt mittels Druckluft weiterbeförderbar sind.

Die Druckluft wird dabei mittels einer Drucklufteinheit durch Eintrittsöffnungen im Boden des Übergangsabschnitts bzw. im Flachförderabschnitt geblasen, wobei der Boden die Förderoberfläche bildet. Prinzipiell ist es natürlich auch vorstellbar, die Druckluft auch durch Seitenwände einströmen zu lassen. Daher ist es bei einer besonders bevorzugten Ausführungsform des Förderabschnitts vorgesehen, dass die Förderoberfläche im Mittelbereich, im Endbereich und im Flachförderabschnitt Lufteintrittsöffnungen aufweist, durch welche mittels einer Drucklufteinheit Druckluft in einer Blasrichtung einblasbar ist, um die Behälterverschlüsse weiter zu fördern, wobei die Blasrichtung einen Anteil normal auf die Förderoberfläche und einen Anteil in Förderrichtung aufweist.

Die Druckluft wird dabei vorzugsweise über einen Luftzuführungskanal, der unter der Förderoberfläche verläuft, zugeführt. Hierzu ist zu bemerken, dass Staub, der sich auf den Behälterverschlüssen beispielsweise aufgrund deren Transports oder Erzeugung findet, durch die Druckluft zumindest teilweise abgeblasen wird. D.h. die Behälterverschlüsse werden durch die Druckluft nicht nur weitergefördert, sondern auch gleichzeitig entstaubt.

Die Erzeugung der zur Beförderung der Behälterverschlüsse eingesetzten Druckluft ist einerseits mit Kosten verbunden, andererseits ist aus hygienischen Gründen problematisch, die eingeblasene Druckluft einfach in die Umgebung entweichen zu lassen. Letzteres führt unweigerlich zu Luftströmungen und Luftverwirbelungen, die ein ideales Transportmittel für den Staub und Keime, die entweder Teil des Staubs sind oder auf diesen als Kristallisationspunkt haben, darstellen. Einen solchen Staub- bzw. Keimtransport gilt es zu verhindern. Daher ist es einerseits vorgesehen, die Förderoberfläche mit Seitenwänden und einer Decke abzuschließen und so die Ausbreitung von Luftverwirbelungen zu unterbinden. Andererseits sind Mittel vorgesehen, um die verbrauchte Druckluft wieder zur Drucklufteinheit rückzuführen, zu filtern und wiederzuverwenden. Dies kann beispielsweise mittels eines Luftrückführungskanals erfolgen, der im Bereich des Luftzuführungskanals angeordnet ist. Dabei wird die eingeblasene Druckluft beispielsweise über Löcher, die in bestimmten Abständen seitlich entlang der Förderoberfläche bzw. in deren Nähe angeordnet sind, in den Luftrückführungskanal gesogen. Insbesondere für relativ kurze Förderabschnitte ist es natürlich auch denkbar, nur am Ende des Förderabschnitts die verbrauchte Druckluft in den Luftrückführungskanal zu saugen. Die rückgeführte Luft kann in einem Filter gefiltert werden, wodurch etwaig mitgeführter Staub und/oder Keime von den Behälterverschlüssen aus der Druckluft abgeschieden werden. D.h. es kann zunächst sterile Druckluft eingeblasen werden. Diese wird mit Staub und/oder Keimen kontaminiert, rückgeführt und mittels Filter, vorzugsweise mittels sogenannter High Efficiency Particulate Airfilter (HEPA)-Filter wieder gereinigt bzw. sterilisiert. Auf diese Weise kann einerseits fast die gesamte Druckluft wiederverwendet werden, andererseits wird der Transport von Staub und/oder Keimen unterbunden. Hierbei kann dasselbe Gebläse sowohl für das Einblasen als auch das Einsaugen bzw. Rückführen der Druckluft verwendet werden.

Der Antrieb, mit dem die Behälterverschlüsse durch den Förderkanal gedrückt werden kann grundsätzlich formschlüssig oder kraftschlüssig erfolgen. Bei einem formschlüssigen Antrieb müssen die Behälterverschlüsse beim Eintritt in den Antrieb üblicherweise mit einer gewissen Anpresskraft dicht aneinander liegen, sodass keine Lücke zwischen den Behälterverschlüssen vorhanden ist und der Formschluss mit dem Antrieb garantiert werden kann. Falls jedoch eine Lücke zwischen den Behälterverschlüssen beim Eintritt in den formschlüssigen Antrieb entsteht, besteht die Gefahr, dass ein Formschluss nicht richtig hergestellt wird, was im schlimmsten Fall zu einem Zerquetschen der Behälter führen kann. Diese Gefahr bzw. die oben genannten strengen Anforderungen an die Zuführung der Behälterverschlüsse bei deren Eintritt in den Antrieb sind bei einem kraftschlüssig arbeitenden Antrieb nicht gegeben, weshalb diesem der Vorzug gegeben wird. Konkret sind für den Antrieb Einzugsriemen vorgesehen, die an den Behälterverschlüssen kraftschlüssig angreifen. Entsprechend ist es bei einer besonders bevorzugten Ausführungsform des Förderabschnitts vorgesehen, dass der Antrieb Einzugsriemen aufweist, die kraftschlüssig an den Behälterverschlüssen angreifen, um diese in Förderrichtung bzw. in Richtung Förderkanal weiter zu befördern und/oder gegen im Förderkanal bereits befindliche Behälterverschlüsse zu schieben bzw. zu drücken.

Typischerweise weisen die Behälterverschlüsse eine Oberseite und eine Unterseite auf, wobei Ober- und Unterseite im Wesentlichen parallel zueinander sind und die Unterseite dem Inneren eines Behälters zugewandt ist und die Oberseite außerhalb des Behälters liegt, wenn der Behälter mit dem Behälterverschluss verschlossen ist. Um die Unterseite von möglichen Keimen befreien oder mit einer Prüfeinrichtung auf mögliche Defekte überprüfen zu können, werden die Behälterverschlüsse vorzugsweise mit ihrer Oberseite auf der Förderoberfläche aufliegend befördert. Da die Behälterverschlüsse im Bereich ihrer Oberseite am stabilsten sind, greifen die Einzugsriemen bevorzugt in diesem Bereich an. Daher ist es bei einer bevorzugten Ausführungsform des Förderabschnitts vorgesehen, dass die Einzugsriemen in einer Normalrichtung gesehen im Wesentlichen unmittelbar nach der Förderoberfläche angeordnet sind, wobei die Normalrichtung normal auf die Förderoberfläche steht und einen Richtungsanteil gegen die Schwerkraft aufweist.

Die typische Anordnung ist dabei so, dass die Einzugsriemen von einander gegenüberliegenden Seiten die Behälterverschlüsse kraftschlüssig kontaktieren. Entsprechend ist es bei einer besonders bevorzugten Ausführungsform des Förderabschnitts vorgesehen, dass die Einzugsriemen erste Einzugsriemen umfassen, die an den Behälterverschlüssen von einer ersten Seite angreifen, und zweite Einzugsriemen, die an den Behälterverschlüssen von einer zweiten Seite angreifen, und dass die erste Seite und zweite Seite bzw. die ersten Einzugsriemen und zweiten Einzugsriemen einander im Wesentlichen um eine Spiegelebene spiegelsymmetrisch gegenüberliegen, wobei die Spiegelebene normal auf die Förderoberfläche und parallel zur Förderrichtung liegt.

Um die Behälterverschlüsse zu kontaktieren, weisen die Einzugsriemen an ihrer Oberfläche eine Kontaktoberfläche auf. Im Bereich der Kontaktoberfläche sind die Einzugsriemen elastisch ausgeführt, sodass die Behälterverschlüsse durch den Kraftschluss nicht gequetscht werden. Dies ist insbesondere bei Behälterverschlüssen aus Aluminium wichtig, um Beschädigungen der Behälterverschlüsse zu vermeiden, da Behälterverschlüsse aus Aluminium in der Regel besonders druckempfindlich sind. Daher ist es bei einer bevorzugten Ausführungsform des Förderabschnitts vorgesehen, dass die Einzugsriemen mit jeweils einer Kontaktoberfläche, die Teil der Oberfläche der Einzugsriemen ist, an den Behälterverschlüssen angreifen, wobei die Einzugsriemen im Bereich der Kontaktoberfläche in einer Richtung normal auf die Spiegelebene komprimierbar sind, um Quetschungen der Behälterverschlüsse zu vermeiden.

Um ein problemloses Aufnehmen der Behälterverschlüsse unabhängig von deren Außenkontur zu ermöglichen, ist es von Vorteil, wenn die Oberfläche bzw. Kontaktoberfläche der Einzugsriemen glatt ausgeführt ist. Für eine lange Lebensdauer und um Kontaminationsgefahr aufgrund von Abrieb zu vermeiden, sollen die Einzugsriemen abriebfest ausgeführt sein. Entsprechend ist es bei einer besonders bevorzugten Ausführungsform des Förderabschnitts vorgesehen, dass die Oberfläche, insbesondere die Kontaktoberfläche der Einzugsriemen glatt und abriebfest ist.

Insbesondere Schraubverschlüsse weisen meist einen Sicherungsring auf, der an einem unteren Ende, welches von der Oberseite der Behälterverschlüsse weg weist, angeordnet ist. Dieser ist über Sollbruchstellen mit dem restlichen Behälterverschluss verbunden, sodass der Sicherungsring beim erstmaligen Öffnen eines mit dem Behälterverschluss verschlossenen Behälters abreißt. Für eine einwandfreie Funktionsfähigkeit des Sicherungsringes darf dieser nicht schon vorher mechanischer Krafteinwirkung ausgesetzt werden. Daher soll der Kraftschluss der Einzugsriemen mit den Behälterverschlüssen jedenfalls nicht im Bereich von etwaiger Sicherungsringe erfolgen, sondern möglichst nahe an der Förderoberfläche, im Bereich der Oberseite der Behälterverschlüsse. Zu diesem Zweck weisen die Einzugsriemen im Querschnitt einen Vorsprung auf, der die Kontaktoberfläche zur kraftschlüssigen Kontaktierung der Behälterverschlüsse beinhaltet. Der Vorsprung kann z.B. stufenförmig oder L-förmig oder, besonders bevorzugt, als Schräge ausgeführt sein.

Deshalb ist es bei einer bevorzugten Ausführungsform des Förderabschnitts vorgesehen, dass die Einzugsriemen jeweils einen in Richtung der Behälterverschlüsse weisenden Vorsprung aufweisen und die Kontaktoberfläche die den Behälterverschlüssen zugewandte Oberfläche des Vorsprungs ist, wobei der Vorsprung vorzugsweise als bzw. mit einer Schräge ausgeführt ist. Dabei ist in einer besonders bevorzugten Ausführungsform des Förderabschnitts der Vorsprung in Normalrichtung gesehen unmittelbar nach der Förderoberfläche angeordnet ist, um möglichst nahe an der Förderoberfläche an den Behälterverschlüssen anzugreifen.

Erste und zweite Einzugsriemen bewegen sich in dieselbe Richtung und werden über Riemenscheiben angetrieben. Da erste und zweite Einzugsriemen auf unterschiedlichen Seiten angeordnet sind, müssen sich die entsprechenden Riemenscheiben folglich in unterschiedlichen Richtungen drehen. Dabei müssen nicht alle ersten oder zweiten Riemenscheiben dem Antrieb dienen; es genügt beispielsweise, wenn eine erste und eine zweite Riemenscheibe dem Antrieb dienen und die restlichen ersten und zweiten Riemenscheiben lediglich als Umlenkscheiben fungieren. Daher ist es bei einer bevorzugten Ausführungsform des Förderabschnitts vorgesehen, dass die ersten Einzugsriemen von ersten Riemenscheiben angetrieben und/oder umgelenkt werden, die sich in eine erste Drehrichtung drehen, und dass die zweiten Einzugsriemen von zweiten Riemenscheiben angetrieben und/oder umgelenkt werden, die sich in eine zweite Drehrichtung, umgekehrt zur ersten Drehrichtung drehen, wobei die Drehachse parallel zur Normalrichtung ist.

Die Riemenscheiben sind an Riemenscheibenachsen befestigt, welche in zwei separaten Lagerbacken gelagert sind. Entsprechend ist es bei einer bevorzugten Ausführungsform des Förderabschnitts vorgesehen, dass die ersten Riemenscheiben jeweils eine erste Riemenscheibenachse aufweisen und die zweiten Riemenscheiben jeweils eine zweite Riemenscheibenachse, und dass die ersten Riemenscheibenachsen in einer ersten Lagerbacke und die zweiten Riemenscheibenachsen in einer zweiten Lagerbacke gelagert sind bzw. durch diese hindurch gehen, wobei die Anordnung und die Form der Lagerbacken spiegelsymmetrisch um die Spiegelebene ist.

Durch Variation des Abstands der ersten und zweiten Lagerbacken zueinander kann der Abstand der ersten und zweiten Einzugsriemen zueinander eingestellt werden. Dies ermöglicht die kraftschlüssige Beförderung von Behälterverschlüssen mit unterschiedlichsten Durchmessern. Folglich ist es bei einer besonders bevorzugten Ausführungsform des Förderabschnitts vorgesehen, dass die Lagerbacken zueinander verschieblich gelagert sind, um deren Abstand zueinander und damit den Abstand zwischen ersten und zweiten Einzugsriemen variieren zu können. Dabei sind die Lagerbacken in einer weiteren besonders bevorzugten Ausführungsform des Förderabschnitts an einem Rahmen einer Riemenscheibenantriebseinheit verschieblich gelagert.

Um den Abstand der Lagerbacken genau justieren zu können, sind die Lagerbacken so geformt, dass eine keilförmige Öffnung zwischen ihnen vorhanden ist. In dieser keilförmigen Öffnung kann ein Keil positioniert und fixiert werden, womit dann auch der Abstand der Lagerbacken zueinander fixiert ist. Daher ist es bei einer besonders bevorzugten Ausführungsform des Förderabschnitts vorgesehen, dass der -Spiegelebene zugewandten Flächen der Lagerbacken zumindest über einen gewissen Bereich in Förderrichtung gesehen jeweils einen spitzen Winkel mit der Spiegelebene einschließen, um eine keilförmige Öffnung zwischen den Lagerbacken zu bilden, und dass in die keilförmige Öffnung ein Keil einbringbar ist, welcher in unterschiedlichen Positionen in der keilförmigen Öffnung fixierbar ist, um den Abstand der Lagerbacken zueinander einzustellen. Neben dem Keil ist zur Positionierung der Lagerbacken außerdem mindestens eine Zugfeder vorgesehen, um die Lagerbacken in Richtung senkrecht auf die Spiegelebene zueinander zu ziehen.

Um den Keil zu positionieren und zu fixieren kann eine Stellschraube verwendet werden. Der Sitz der Stellschraube muss dabei von den Lagerbacken unabhängig sein. Außerdem soll die Stellschraube gut zugänglich sein, um bei Bedarf den Abstand der Lagerbacken bzw. der Einzugsriemen zueinander auf die aktuelle Behälterverschlussgröße einstellen zu können. Entsprechend ist es bei einer besonders bevorzugten Ausführungsform des Förderabschnitts vorgesehen, dass der Keil mittels einer Stellschraube entlang der Förderrichtung in der keilförmigen Öffnung positionierbar und in unterschiedlichen Positionen in der keilförmigen Öffnung fixierbar ist, wobei die Stellschraube parallel zur Förderrichtung orientiert ist und vorzugsweise an einem Rahmen einer Riemenscheibenantriebseinheit angreift.

Die Riemenscheibenachsen weisen an ihrem einen Ende die Riemenscheiben und an ihrem anderen Ende Antriebsscheiben auf. Letztere können über Antriebsriemen angetrieben werden. Wenn die Verbindung einer Antriebsscheibe mit einer Riemenscheibenachse starr ist, so kann durch den Antrieb dieser Antriebsscheibe auch die entsprechende Riemenscheibe angetrieben werden. Um sowohl die ersten als auch die zweiten Einzugsriemen anzutreiben, ist es notwendig, dass zumindest eine (angetriebene) Antriebsscheibe starr mit einer ersten Riemenscheibenachse und eine (angetriebene) Antriebsscheibe starr mit einer zweiten Riemenscheibenachse verbunden sind. Daher ist es bei einer bevorzugten Ausführungsform des Förderabschnitts vorgesehen, dass in Normalrichtung gesehen die Riemenscheiben vor jeweils einer Grundfläche der Lagerbacken liegen, dass auf die Lagerbackengrundflächen jeweils eine Lagerbackendeckfläche folgt, dass nach den Lagerbackendeckflächen mindestens eine erste und mindestens eine zweite Antriebsscheibe angeordnet sind, wobei mindestens eine erste Antriebsscheibe starr mit einer der ersten Riemenscheibenachsen und mindestens eine zweite Antriebsscheibe mit einer der zweiten Riemenscheibenachsen verbunden sind, und dass die Drehachse dieser mindestens einen ersten Antriebsscheibe zugleich die Drehachse einer ersten Riemenscheibe und die Drehachse dieser mindestens einen zweiten Antriebsscheibe zugleich die Drehachse einer zweiten Riemenscheibe sind.

Eine platzsparende Möglichkeit, die Antriebsscheiben anzutreiben, ist, die Antriebsriemen nicht in derselben Ebene laufen zu lassen, wodurch diese in weiterer Folge zentral angetrieben werden können. Entsprechend sind auch erste und zweite Antriebsscheiben in parallelen aber unterschiedlichen Ebenen angeordnet, die jeweils parallel zur ersten bzw. zweiten Lagerbackendeckfläche liegen. Folglich ist es bei einer bevorzugten Ausführungsform des Förderabschnitts vorgesehen, dass die ersten und zweiten Lagerbackendeckflächen in einer Ebene liegen, dass die mindestens eine erste Antriebsscheibe in einer Ebene parallel zur ersten Lagerbackendeckfläche liegt, und dass die mindestens eine zweite Antriebsscheibe in einer Ebene parallel zur zweiten Lagerbackendeckfläche liegt.

Der zentrale Antrieb erfolgt über eine Zentralantriebsscheibe, die zwischen den ersten und zweiten Antriebsscheiben angeordnet werden kann. Entsprechend ist es bei einer bevorzugten Ausführungsform des Förderabschnitts vorgesehen, dass in Förderrichtung gesehen und in Richtung normal auf die Spiegelebene gesehen zwischen den Antriebsscheiben eine Zentralantriebsscheibe angeordnet ist, um mittels eines ersten Antriebsriemens die mindestens eine erste Antriebsscheibe in der ersten Drehrichtung zu drehen und mittels eines zweiten Antriebsriemens die mindestens eine zweite Antriebsscheibe in der zweiten Drehrichtung zu drehen, wobei die Drehachse der Zentralantriebsscheibe parallel zu den Drehachsen der Riemenscheiben bzw. der Antriebsscheiben liegt.

Da die Lagerbackendeckflächen in einer Ebene liegen, müssen die Abstände der Antriebsscheiben zur jeweiligen Lagerdeckfläche unterschiedlich sein. Daher ist es bei einer besonders bevorzugten Ausführungsform des Förderabschnitts vorgesehen, dass ein Abstand d₁ der mindestens einen ersten Antriebsscheibe zur ersten Lagerbackendeckfläche kleiner oder größer ist als ein Abstand d₂ der mindestens einen zweiten Antriebsscheibe zur zweiten Lagerbackendeckfläche, wobei die Abstände d₁ und d₂ jeweils entlang der Normalrichtung gemessen sind. Die Zentralantriebsscheibe muss so dick sein wie der Absolutbetrag der Differenz dieser Abstände, weshalb es in einer besonders bevorzugten Ausführungsform des Förderabschnitts vorgesehen ist, dass die Zentralantriebsscheibe in Normalrichtung eine Dicke aufweist, die mindestens so groß ist wie der Absolutbetrag |d₁-d₂|.

Somit können zwei Antriebsriemen, die in Normalrichtung zueinander beabstandet sind, an der Zentralantriebsscheibe angreifen. Um die unterschiedliche Drehrichtung der Antriebsriemen und damit der ersten und zweiten Antriebsscheiben sicherzustellen, müssen die Antriebsriemen unterschiedlich an der Zentralantriebsscheibe angreifen. Daher ist es bei einer besonders bevorzugten Ausführungsform des Förderabschnitts vorgesehen, dass der erste und der zweite Antriebsriemen an der Zentralantriebsscheibe in Normalrichtung voneinander beabstandet angreifen, wobei der erste Antriebsriemen mit seiner der mindestens einen ersten Antriebsscheibe zugewandten Seite an der Zentralantriebsscheibe angreift und der zweite Antriebsriemen mit seiner der mindestens einen zweiten Antriebsscheiben abgewandten Seite an der Zentralantriebsscheibe angreift, oder wobei der erste Antriebsriemen mit seiner der mindestens einen ersten Antriebsscheibe abgewandten Seite an der Zentralantriebsscheibe angreift und der zweite Antriebsriemen mit seiner der mindestens einen zweiten Antriebsscheibe zugewandten Seite an der Zentralantriebsscheibe angreift.

Die Zentralantriebsscheibe kann wiederum mittels eines Elektromotors angetrieben werden. Entsprechend ist es bei einer besonders bevorzugten Ausführungsform des Förderabschnitts vorgesehen, dass die Zentralantriebsscheibe mittels eines Elektromotors antreibbar ist, wobei der Elektromotor vorzugsweise eine Antriebswelle aufweist, die mit der Zentralantriebsscheibe verbunden ist und deren Drehachse mit der Drehachse der Zentralantriebsscheibe identisch ist.

Der Förderkanal, durch den die Behälterverschlüsse gedrückt werden, muss außer in und gegen die Förderrichtung nach allen Seiten hin verschlossen bzw. begrenzt sein, um ein Herabfallen der Behälterverschlüsse zu vermeiden. Daher ist es bei einer bevorzugten Ausführungsform des Förderabschnitts vorgesehen, dass der Boden des Förderkanals die Förderoberfläche bildet, und dass der Förderkanal bzw. die Förderoberfläche auf der ersten und zweiten Seite durch Seitenwände in einer Breitenrichtung, welche normal auf die Spiegelebene steht, auf eine Förderkanalbreite begrenzt wird.

Um die einwandfreie Beförderung, d.h. unter Beibehaltung einer definierten Lage bzw. Orientierung, von unterschiedlich großen Behälterverschlüssen garantieren zu können, muss der Förderkanal in seiner Breite verstellbar sein. Daher ist es bei einer besonders bevorzugten Ausführungsform des Förderabschnitts vorgesehen, dass die Seitenwände parallel zur Breitenrichtung verschiebbar und fixierbar sind, um unterschiedliche Breiten des Förderkanals bzw. der Förderoberfläche einstellen zu können.

Für eine optimale Anpassung des Förderkanalquerschnitts an die Größe der zu befördernden Behälterverschlüsse ist es erforderlich, auch die Höhe des Förderkanals anpassen zu können. Daher ist es bei einer besonders bevorzugten Ausführungsform des Förderabschnitts vorgesehen, dass der Förderkanal eine Förderkanaldecke aufweist, die parallel zur Förderoberfläche verläuft und den Förderkanal in einer Höhenrichtung, die normal auf die Förderoberfläche steht, auf eine Förderkanalhöhe begrenzt. Außerdem ist bei einer besonders bevorzugten Ausführungsform des Förderabschnitts vorgesehen, dass die Förderkanaldecke parallel zur Höhenrichtung verschiebbar und fixierbar ist, um unterschiedliche Förderkanalhöhen einstellen zu können.

Um ein Herunterfallen auch im Übergangsabschnitt und im Flachförderabschnitt ausschließen zu können, sind Seiten- und Höhenbegrenzungen völlig analog auch für diese Abschnitte vorgesehen. Daher ist es bei einer besonders bevorzugten Ausführungsform des Förderabschnitts vorgesehen, dass der Übergangsabschnitt und der Flachförderabschnitt einen Boden aufweisen, der die Förderoberfläche bildet, und dass der Übergangsabschnitt und/oder der Flachförderabschnitt in der Breitenrichtung durch Seitenwände begrenzt werden, welche parallel zur Breitenrichtung verschiebbar und fixierbar sind. Weiters ist es bei einer besonders bevorzugten Ausführungsform des Förderabschnitts vorgesehen, dass der Übergangsabschnitt und/oder der Flachförderabschnitt eine Decke aufweisen, welche parallel zur Höhenrichtung verschiebbar und fixierbar ist. Da sich im gekrümmten Bereich des Übergangsabschnitts die (Bogen-)Länge der entsprechenden Decke bei Verstellung in Höhenrichtung ändert, ist die Decke in diesem Bereich vorzugsweise aus einzelnen Elementen gefertigt, die einander an ihren Enden fingerartig bzw. kammartig überlappen. D.h. die einzelnen Elemente sind in ihren Endbereichen gegeneinander teleskopartig verschiebbar, sodass die Decke insgesamt stets durchgehend erhalten bleibt.

Um die einwandfreie Qualität der Behälterverschlüsse zu garantieren, ist weiters ein Prüfabschnitt mit einer CCD-Kamera und einer Auswerteeinheit vorgesehen. Dies ist sinnvoll, da insbesondere beim Vereinzeln und Lageorientieren die Behälterverschlüsse beschädigt werden können. Darüber hinaus können die Behälterverschlüsse natürlich bereits beim Herstellungsprozess oder ihrem Transport beschädigt worden sein. Außerdem soll sichergestellt werden, dass die Behälterverschlüsse artrichtig sind, d.h. dass sie tatsächlich korrekt lageorientiert sind, die richtige Farbe, Form etc. haben, sprich vom richtigen Typ sind. Daher ist es bei einer erfindungsgemäßen Ausführungsform des Förderabschnitts vorgesehen, dass der Förderabschnitt einen Prüfabschnitt mit Prüfmittel zur Prüfung der Behälterverschlüsse auf deren Artrichtigkeit und Unversehrtheit umfasst, wobei der Prüfabschnitt in Förderrichtung gesehen vor dem Antrieb angeordnet ist.

Um defekte und/oder artfalsche Behälterverschlüsse auszuleiten ist außerdem ein Ausleitungsabschnitt vorgesehen, der in Abhängigkeit des Ergebnisses der Auswerteeinheit die Behälterverschlüsse ausleiten kann. Beispielsweise kann der Ausleitungsabschnitt von der Auswerteeinheit angesteuert werden. Entsprechend ist es bei einer bevorzugten Ausführungsform des erfindungsgemäßen Förderabschnitts vorgesehen, dass der Förderabschnitt weiters einen Ausleitungsabschnitt zur Ausleitung artfalscher und/oder defekter Behälterverschlüsse umfasst, wobei der Ausleitungsabschnitt nach dem Prüfabschnitt angeordnet ist.

Stellt die Auswerteeinheit einen defekten Behälterverschluss fest, soll dieser komplett ausgeschieden werden. Wird hingegen nur eine Artfalschheit, d.h. eine falsche Orientierung, eine falsche Farbe, eine falsch Form bzw. ein falscher Typ festgestellt, ist es sinnvoll diesen Behälterverschluss in einen anderen Kanal auszuleiten. Die artfalschen Behälterverschlüsse können so gesammelt und in weiterer Folge der Vorrichtung erneut zugeführt werden. Daher ist es bei einer besonders bevorzugten Ausführungsform des erfindungsgemäßen Förderabschnitts vorgesehen, dass der Ausleitungsabschnitt zwei Ausleitungskanäle umfasst, wobei ein Ausleitungskanal zur Ausleitung artfalscher Behälterverschlüsse dient und der andere Ausleitungskanal zur Ausleitung defekter Behälterverschlüsse.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Seitenansicht einer erfindungsgemäßen Vorrichtung
- Fig. 2: eine erfindungsgemäße Vorrichtung in Aufsicht
- Fig. 3: eine axonometrische Ansicht einer Riemenscheibenantriebseinheit ohne Elektromotor mit Blick auf Einzugsriemen
- Fig. 4: eine axonometrische Ansicht einer Riemenscheibenantriebseinheit ohne Elektromotor mit Blick auf Antriebsscheiben
- Fig. 5: eine Schnittansicht der Riemenscheibenantriebseinheit aus Fig. 4 gemäß der Schnittlinie A-A in Fig. 4
- Fig. 6: eine Schnittansicht einer Riemenscheibenantriebseinheit wie in Fig. 5, jedoch mit Elektromotor
- Fig. 7: eine Schnittansicht von Lagerbacken einer Riemenantriebseinheit gemäß der Schnittlinie B-B in Fig. 6
- Fig. 8: eine Detailansicht eines Bereichs C aus Fig. 5, jedoch mit Behälterverschluss
- Fig. 9: eine Detailansicht des Bereichs Z aus Fig. 8
- Fig. 10: eine Ansicht analog zu Fig. 1, jedoch mit einer alternativen Anordnung eines größer dimensionierten Antriebs
- Fig. 11: eine Ansicht analog zu Fig. 1, jedoch mit einer alternativen Anordnung des Antriebs

### WEGE ZUR AUSFÜHRUNG DER ERFINDUNG

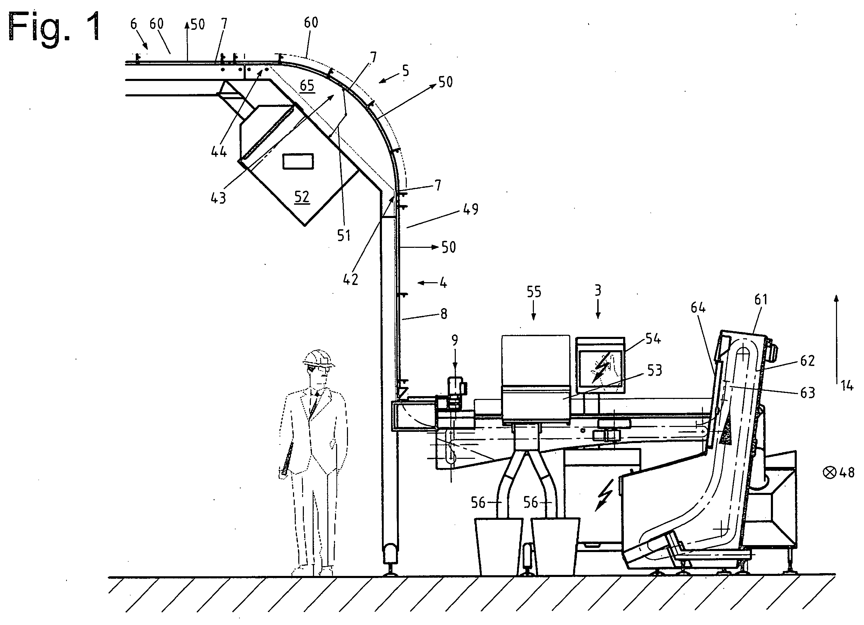

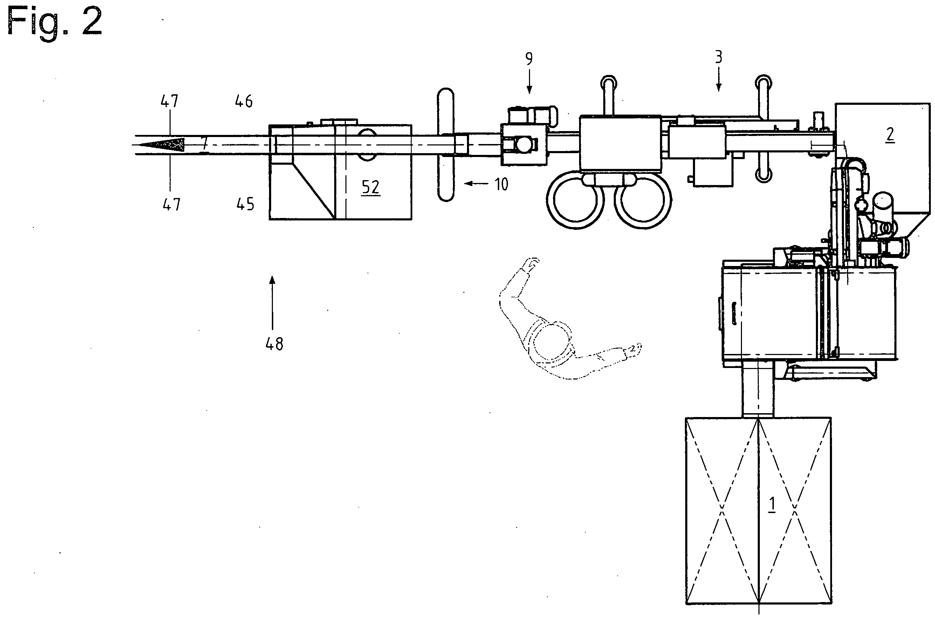

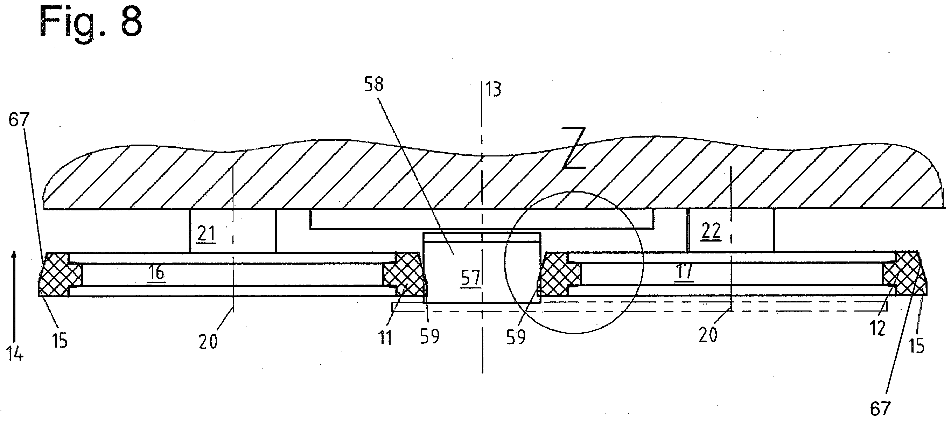

Fig. 1 zeigt den erfindungsgemäßen Förderabschnitt als Teil einer Vorrichtung zum Vereinzeln und Lageausrichten von Behälterverschlüssen 57 (vgl. Fig. 8) sowie zum Befördern der Behälterverschlüsse 57 zu einer Weiterverarbeitungsmaschine, vorzugsweise Verschließmaschine (nicht dargestellt). Die Behälterverschlüsse werden zunächst in einen Vorratsbehälter 1 aufgegeben, vgl. Fig. 2.

Die Behälterverschlüsse 57 werden von (nicht dargestellten) Mitnehmern auf einer Kette 62 oder einem Förderband eines Sortiersteilförderers 61 entnommen und beim Hochziehen lageorientiert. Dabei läuft die Kette 62 in einem gewissen Abstand über einer Führungsbahn 63, wobei der Abstand zwischen Kette 62 und Führungsbahn 63 verstellbar ist, um unterschiedliche Größen der Behälterverschlüsse 57 zu berücksichtigen. Die Mitnehmer erstrecken sich von der Kette 62 im Wesentlichen normal zur Kette 62 in Richtung der Führungsbahn 63 bzw. in einer Richtung normal auf die Oberfläche eines Deckels 64 des Sortierförderers. Darüber hinaus erstrecken sich die Mitnehmer balkenförmig in einer Breitenrichtung 48 - über die gesamte Führungsbahn 63 in Breitenrichtung 48. Aufgrund der Geometrie der Behälterverschlüsse 57 werden nur korrekt orientierte Behälterverschlüsse 57 von den Mitnehmern mitgenommen.

Die Führungsbahn 63 weist kiemenartigen Öffnungen (nicht näher dargestellt) auf, aus denen vorzugsweise sterile Druckluft geblasen wird, um die vereinzelten Behälterverschlüsse 57 in Richtung einer Übergabestation 2 zu blasen, wobei diese Richtung parallel zur Breitenrichtung 48 ist. Die Druckluft wird dabei aus einem (nicht näher dargestellten) Luftkasten durch die Kiemen geblasen, der auf der der Kette 62 abgewandten Seite des Führungsblechs 63 angeordnet ist und sich im Wesentlichen über die gesamte Ausdehnung des Führungsblechs 63 erstreckt. Die sterile Druckluft wird mittels eines eigenen (nicht dargestellten) Gebläses, welches einen Mitteldruckradialventilator umfasst, erzeugt und weist einen Druck von typischerweise 1,1 bis 2 bar auf. D.h. diese Druckluft ist unabhängig von einem eventuell vorhandenen Druckluftnetz.

Im Bereich des Bodens, insbesondere im Bereich einer (nicht näher dargestellten) Einlaufrutsche des Sortiersteilförderers 61 ist eine Luftabsaugung angeordnet, wobei hierfür dasselbe Gebläse verwendet wird, das zur Erzeugung der oben genannten Druckluft dient. D.h. der Luftkasten wird auch zur Absaugung benutzt. Die Anordnung der Absaugung im Bereich des Bodens des Sortiersteilförderers 61 hat den großen Vorteil, dass Staub, der sich auf den Behälterverschlüssen 57 z.B. aufgrund des Transports befindet und von diesen herab, in Richtung des Bodens des Steilsortierförderers 61 fällt, effizient abgesaugt werden kann.

Von der Übergabestation 2 werden die lageorientierten Behälterverschlüsse 57 auf eine Förderoberfläche 7 zur Weiterbeförderung in einer Förderrichtung 10 übergeben. Dabei werden die Behälterverschlüsse 57 mittels einer oszillierenden Führung eingedrängt.

Die Führung kann wie im Sortiersteilförderer 61 als Blech mit Kiemen ausgelegt sein, wobei auf der den Behälterverschlüssen 57 abgewandten Seite der Führung ein Luftkasten zur Einblasung sowie Absaugung von Druckluft angeordnet ist. Auch diese Druckluft muss nicht einem Druckluftnetz entnommen werden, sondern wird über ein eigenes Gebläse zur Verfügung gestellt.

Die Behälterverschlüsse 57 müssen im Anschluss einen Prüfabschnitt 3 passieren, in welchem eine CCD-Kamera 53 angeordnet ist, welche wiederum mit einer Auswerteeinheit 54 verbunden ist. Diese stellt aufgrund des mit der CCD-Kamera aufgenommenen Bildes fest, ob ein defekter oder artfalscher Behälterverschluss 57 vorliegt.

Basierend auf dem Ergebnis der Auswerteeinheit 54 kann der Behälterverschluss den folgenden Ausleitungsabschnitt 55 entweder ungehindert passieren, oder der Behälterverschluss wird in einen Ausleitungskanal 56 befördert. Es sind zwei Ausleitungskanäle 56 vorgesehen, einer für defekte und einer für artfalsche Behälterverschlüsse 57. Die artfalschen Behälterverschlüsse 57 können somit gesammelt und in weiterer Folge gegebenenfalls wieder in den Vorratsbehälter 1 getan werden.

Es versteht sich, dass außer einer CCD-Kamera 53 auch andere Kameras für den Einsatz im Prüfabschnitt 3 geeignet sind. Darüber hinaus ist es denkbar nicht nur eine CCD-Kamera 53 einzusetzen, sondern eine Vielzahl von CCD-Kameras 53. Beispielsweise können zwei Kameras eingesetzt werden, wobei eine Kamera eine Aufsicht auf den Behälterverschluss 57 aufnimmt und die andere Kamera eine Seitenansicht, wobei die Blickrichtung normal zur Förderrichtung 10 steht. Oder es werden z.B. drei Kameras eingesetzt, wobei die dritte Kamera eine weitere Seitenansicht liefert, und wobei die Blickrichtung der dritten Seitenansicht antiparallel zur Blickrichtung der zweiten Seitenansicht ist. Oder es können z.B. vier Kameras eingesetzt werden, wobei eine Kamera eine Aufsicht liefert und die drei anderen Kameras Seitenansichten, deren Blickrichtungen in einer Ebene liegen und sich um jeweils 120° in dieser Ebene voneinander unterscheiden.

Nach dem Ausleitungsabschnitt 55 folgt der Antrieb 9 mit dessen Hilfe die Behälterverschlüsse 57 durch den Steilförderabschnitt 4 gedrückt werden. An den Steilförderabschnitt 4 schließt mit einem Anfangsbereich 42 ein Übergangsabschnitt 5 an. In Förderrichtung 10 gesehen folgen auf den Anfangsbereich 42 ein Mittelbereich 43 und ein Endbereich 44 des Übergangsabschnitts 5. Der Endbereich 44 wiederum schließt an einen Flachförderabschnitt 6 an, der im Wesentlichen horizontal orientiert ist.

Der Mittelbereich 43 weist eine Krümmung auf, sodass der Übergangsabschnitt 5 die Behälterverschlüsse 57 kontinuierlich vom im Wesentlichen senkrechten Steilförderabschnitt 4 in den im Wesentlichen horizontalen Flachförderabschnitt 6 überführt. Dabei ist in einem Luftkanal 65 unter dem Mittelbereich 43 ein erstes Luftleitblech 51 angeordnet, um Druckluft, die in einer Drucklufteinheit 52 erzeugt wird, durch nicht näher dargestellte Öffnungen im Boden des Mittelbereichs 43 sowie des Endbereichs 44 und des Flachförderabschnitts 6 zu blasen.

Die Behälterverschlüsse 57 werden also durch den Steilförderabschnitt 4 zumindest bis in den Mittelbereich 43 durch den Antrieb 9 geschoben bzw. gedrückt, worauf sie im Mittelbereich 43 außerdem durch Druckluft weiterbefördert werden. In der weiteren Folge werden die Behälterverschlüsse 57 im Endbereich 44 und im Flachförderabschnitt 6 nur noch mittels Druckluft weiterbefördert.

Der Steilförderabschnitt 4 ist als Förderkanal 8 ausgeführt. In Fig. 1 ist erkennbar, dass der Förderkanal 8 in einer Höhenrichtung 50 von einer Förderkanaldecke 49 begrenzt wird. In Breitenrichtung 48 wird der Förderkanal 8 von Seitenwänden 47 begrenzt, die in Fig. 2 auch im Bereich des Flachförderabschnitts 6 und des Übergangsabschnitts 5 gut zu erkennen sind. Flachförderabschnitt 6 und Übergangsabschnitt 5 weisen außerdem eine Decke 60 auf, die in der Höhenrichtung 50 als Begrenzung fungiert.

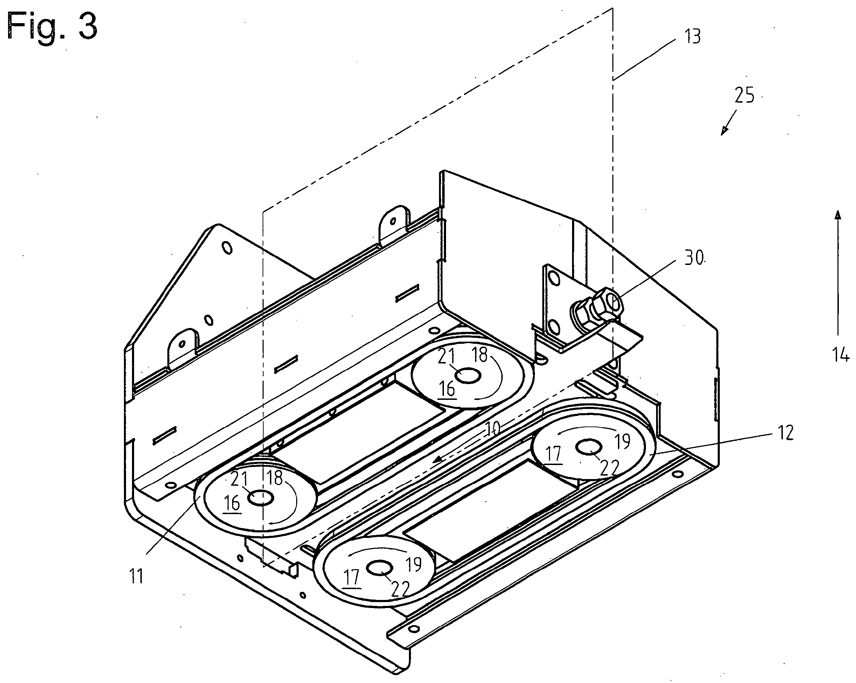

In Fig. 2 sind darüber hinaus eine erste Seite 45 und eine zweite Seite 46 erkennbar, die in Breitenrichtung 48 gesehen vor bzw. nach der Förderoberfläche 7 vorhanden sind. Die erste Seite 45 und die zweite Seite 46 sind symmetrisch zu einer Spiegelebene 13, die in der axonometrischen Ansicht einer Riemenscheibenantriebseinheit 25 der Fig. 3 skizziert ist und parallel zu einer Normalrichtung 14 liegt. Die Riemenscheibenantriebseinheit 25 stellt im Wesentlichen den Antrieb 9 dar und beinhaltet einen ersten Einzugsriemen 11 und einen zweiten Einzugsriemen 12, mit welchen die Behälterverschlüsse 57 kraftschlüssig weiterbefördert werden sollen. Die Einzugsriemen 11, 12 liegen ebenfalls symmetrisch zur Spiegelebene 13 und werden jeweils von zwei ersten 16 und zweiten Riemenscheiben 17 angetrieben bzw. umgelenkt. Die ersten Riemenscheiben 16 drehen sich dabei in eine erste Drehrichtung 18, die zweiten Riemenscheiben 17 in eine entgegengesetzt orientierte zweite Drehrichtung 19.

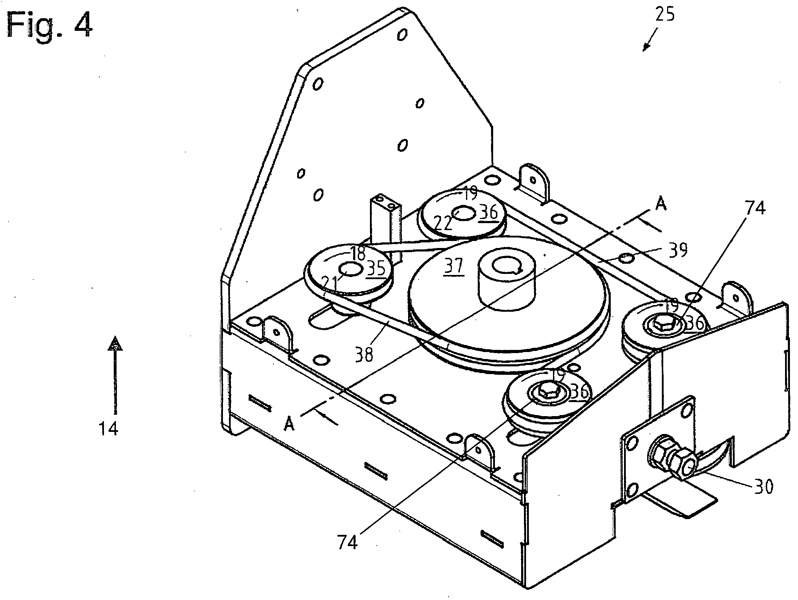

Die ersten Riemenscheiben 16 sind an ersten Riemenscheibenachsen 21 montiert, die zweiten Riemenscheiben 17 an zweiten Riemenscheibenachsen 22, deren Drehachsen 20 jeweils parallel zur Normalrichtung 14 sind, vgl. Fig. 8. An der anderen Seite der ersten und zweiten Riemenscheibenachsen 21 sind eine erste 35 und drei zweite Antriebsscheiben 36 montiert, wobei die ersten Antriebsscheiben 35 zum Antrieb des ersten Einzugsriemens 11 dienen und die zweiten Antriebsscheiben 36 zum Antrieb des zweiten Einzugsriemens 12, siehe Fig. 4. Die erste 35 und die zweiten Antriebsscheiben 36 sind in Normalrichtung 14 voneinander beabstandet. Die erste Antriebsscheibe 35 ist starr mit einer ersten Riemenscheibenachse 21 verbunden und wird mittels einer Zentralantriebsscheibe 37 über einen ersten Antriebsriemen 38 angetrieben. D.h. die entsprechende erste Riemenscheibe 16 wird auf der anderen Seite der ersten Riemenscheibenachse 21 mit angetrieben.

Von den zweiten Antriebsscheiben 36 ist nur eine starr mit einer zweiten Riemenachsenscheibe 22 verbunden. Diese zweite Antriebsscheibe 36 wird über einen zweiten Antriebsriemen 39 angetrieben und treibt somit wiederum eine entsprechende zweite Riemenscheibe 17 auf der anderen Seite der zweiten Riemenscheibenachse 22 an.

Der erste Antriebsriemen 38 greift an der Zentralantriebsscheibe 37 mit einer inneren Seite an, der zweite Antriebsriemen 39 mit einer äußeren Seite, wodurch sich entgegengesetzte erste 18 und zweite Drehrichtungen 19 der ersten 35 und zweiten Antriebsscheiben 36 ergeben. Um einen hinreichen guten Schluss zwischen der Zentralantriebsscheibe 37 und dem zweiten Antriebsriemen 39 sicherzustellen, wird der Antriebsriemen 39 im gezeigten Beispiel über zwei weitere zweite Antriebsscheiben 36 geführt. Diese sitzen zwar im Prinzip auf Riemenscheibenachsen, sind jedoch nicht starr mit diesen verbunden, sondern weisen eine eigene Kugellagerung 74 auf. Diese zweiten Antriebsscheiben 36 dienen lediglich dazu den zweiten Antriebsriemen 39 umzulenken, um einen möglichst großen Umschlingungswinkel mit der Zentralantriebsscheibe 37 zu gewährleisten.

Alternativ zur gezeigten Anordnung könnten eine erste Antriebsscheibe 35 und eine zweite Antriebsscheibe 36 bzw. eine erste Riemenscheibe 16 und eine zweite Riemenscheibe 17 beispielsweise auch direkt mittels jeweils eines eigenen (Getriebe-)Motors in entgegengesetzten Drehrichtungen 18, 19 angetrieben werden. In diesem Fall könnte auf die Zentralantriebsscheibe 37 und auf weitere erste 35 und zweite Antriebsscheiben 36 verzichtet werden.

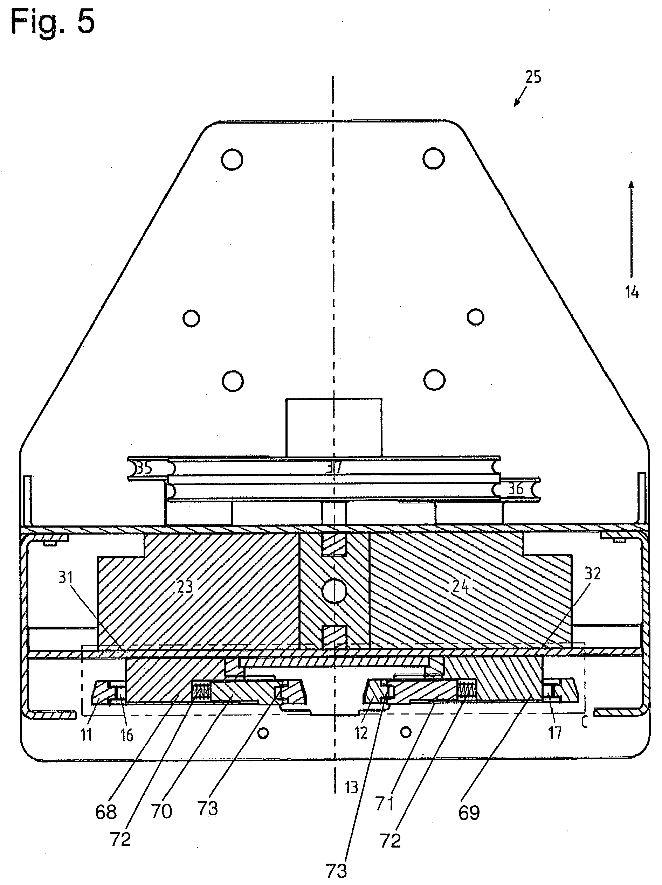

Im Schnitt entlang der Linie A-A in Fig. 4 (die Pfeile symbolisieren die Blickrichtung), der in Fig. 5 dargestellt ist, ist eine erste Lagerbacke 23 mit einer Grundfläche 31 sowie eine zweite Lagerbacke 24 mit einer Grundfläche 32 erkennbar. Damit die Einzugsriemen 11, 12 zwischen ihren jeweiligen Riemenscheiben 16, 17 in Förderrichtung 10 genügend stark gegen die zwischen ihnen befindlichen Behälterverschlüsse 57 drücken können, sind erste 70 und zweite Gleitblöcke 71 vorgesehen. Der erste Gleitblock 70 ist über Druckfedern 72 an einem ersten Grundblock 68 gelagert, welcher mit der ersten Lagerbacke 23 verbunden ist. Der zweite Gleitblock 71 ist über Druckfedern 72 an einem zweiten Grundblock 69 gelagert, der mit der zweiten Lagerbacke 24 verbunden ist. Die Druckfedern 72 sind ihrerseits in an sich bekannter Weise an Bolzen befestigt. D.h. die Grundblöcke 68, 69 können mit der jeweiligen Lagerbacke 23, 24 in einer Richtung normal auf die Spiegelebene 13 verschoben werden und damit auch die Gleitblöcke 70, 71.

Jeder Gleitblock 70, 71 hat an seiner zu einer Einzugsriemenrückseite 73 des jeweiligen Einzugsriemens 11, 12 weisenden Seite eine der Einzugsriemenrückseite 73 angepasste Führungsgeometrie. Die Druckfedern 72 pressen die Gleitblöcke 70, 71 gegen die Einzugsriemen 11, 12, welche über die Gleitblöcke 70, 71 gleiten. Die Gleitblöcke 70, 71 sind daher zumindest an jenen Stellen, die mit der Einzugsriemenrückseite 73 in Berührung kommen, aus Kunststoff mit sehr niedrigem Reibwert, sehr glatter Oberfläche und guten Verschleißeigenschaften gefertigt, beispielsweise aus Polyethylen.

Alternativ ist es auch möglich, die Gleitblöcke 70, 71 an jenen Stellen, die mit der Einzugsriemenrückseite 73 in Berührung kommen, mit einer Vielzahl kleiner Röllchen, vorzugsweise aus Gleitlager-Kunststoff, zu versehen (nicht dargestellt). Beispielsweise können acht, elf oder achtzehn Röllchen (nicht dargestellt) pro Gleitblock 70, 71 vorgesehen werden. Zur Lagerung dieser Röllchen können beispielsweise entsprechend viele Niro-Bolzen (nicht dargestellt) in den Gleitblöcken 70, 71 angeordnet sein.

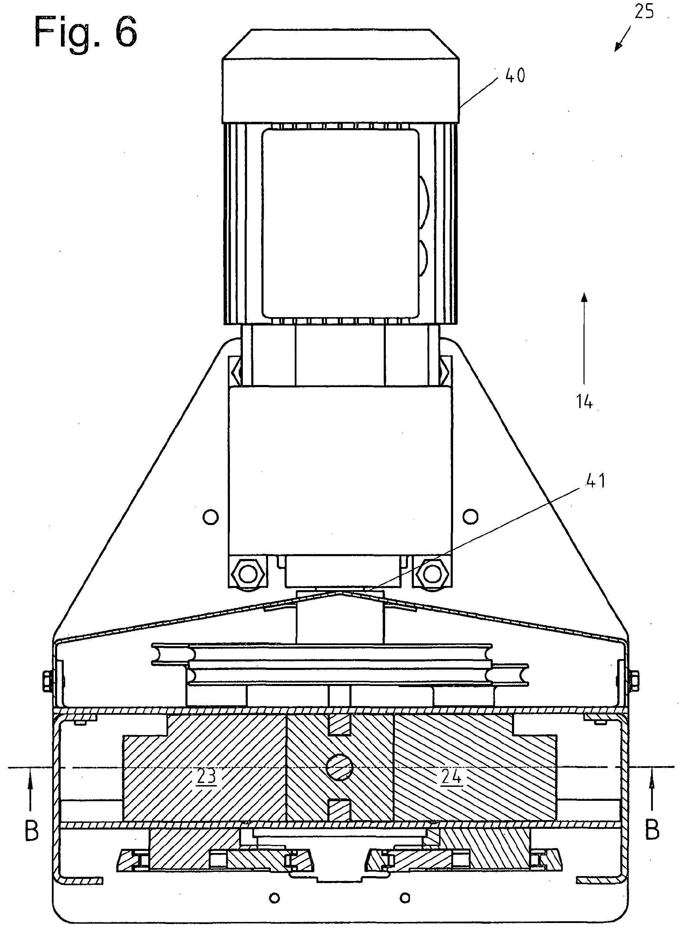

Fig. 6 zeigt die Situation mit Elektromotor 40, der eine Antriebswelle 41 aufweist, die mit der Zentralantriebsscheibe 37 verbunden ist, um diese anzutreiben.

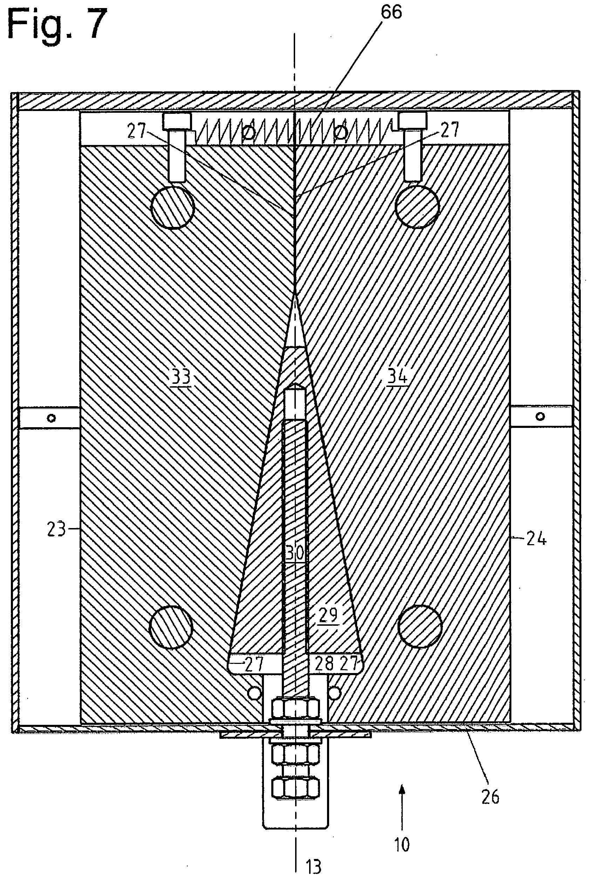

Fig. 7 zeigt einen Schnitt entlang der Linie B-B in Fig. 6 (die Pfeile symbolisieren die Blickrichtung). Die erste 23 und die zweite Lagerbacke 24 werden mittels mindestens einer Zugfeder 66 aufeinander zu gezogen. Weiters sind in Fig. 7 die Deckflächen 33, 34 der ersten 23 und zweiten Lagerbacke 24 erkennbar bzw. deren charakteristische Form. Letztere bewirkt eine keilförmige Öffnung 28 in einem Bereich zwischen der ersten 23 und zweiten Lagerbacke 24, wobei die keilförmige Öffnung 28 von der Spiegelebene 13 zugewandten Seiten 27 der Lagerbacken 23, 24 (teilweise) begrenzt wird. Ein Keil 29 ist in der keilförmigen Öffnung 28 mittels einer Stellschraube 30 positioniert und fixiert. Durch Drehung der Stellschraube kann der Keil parallel zur Förderrichtung 10 bewegt werden, wodurch die erste 23 und zweite Lagerbacke 24 zu- bzw. voneinander weg bewegt werden. Für diese Bewegung sind die Lagerbacken 23, 24 an einem Rahmen 26 der Riemenscheibenantriebseinheit 25 beweglich bzw. verschieblich gelagert.

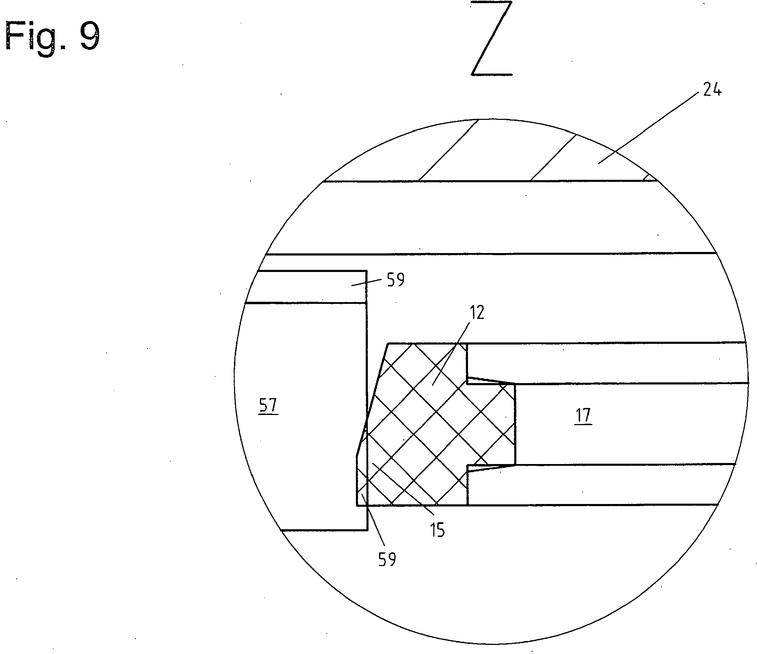

Fig. 8 zeigt im Detail den Bereich C der Fig. 5. Hierin ist erkennbar, dass der erste 11 und der zweite Einzugsriemen 12 einen Vorsprung 15 mit einer Kontaktoberfläche 59 aufweisen, mit der der Behälterverschluss 57 kraftschlüssig kontaktiert wird. Dabei wird ein angreifen der Einzugsriemen 11, 12 in der Nähe eines Sicherungsabschnitts 58 des Behälterverschlusses 57 vermieden. Dies stellt sicher, dass der Sicherungsabschnitt 58 nur durch Lösen des Behälterverschlusses 57 von einem mit dem Behälterverschluss 57 verschlossenen (nicht dargestellten) Behälter vom Behälterverschluss 57 abgetrennt wird. Fig. 9 zeigt das Detail Z der Fig. 8, worin der mit einer Schräge 67 vorspringende Vorsprung 15 mit der Kontaktoberfläche 59 besonders deutlich erkennbar ist.

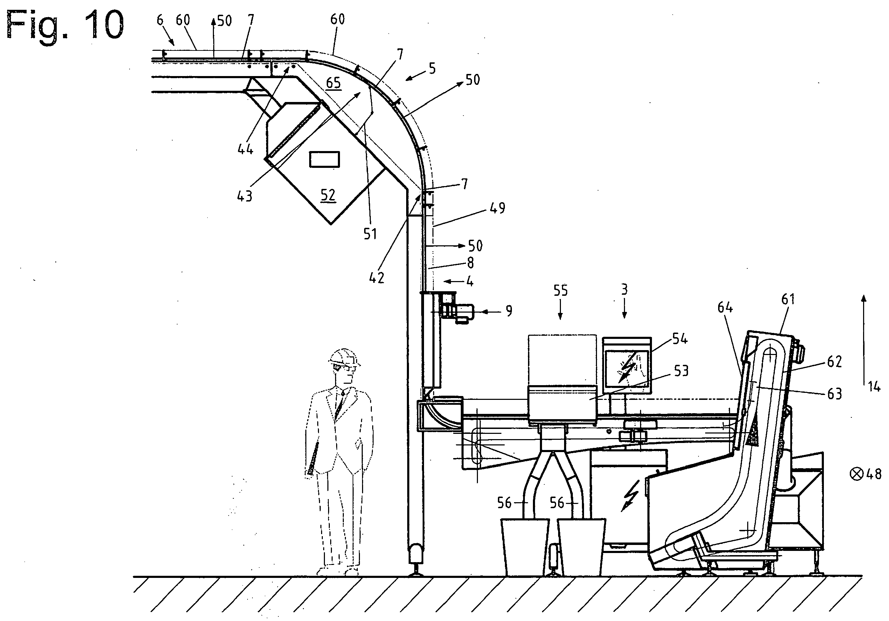

Fig. 10 zeigt analog zur Fig. 1 eine alternative Ausführungsform, wobei der Antrieb 9 ebenfalls vor dem Steilförderabschnitt 4 positioniert ist. Im Unterschied zum Ausführungsbeispiel der Fig. 1 ist der Antrieb jedoch nicht horizontal angeordnet, sondern steht im Wesentlichen genau so steil wie der Förderkanal 8 des Steilförderabschnitts 4. D.h. der Antrieb 9 schließt mit der horizontalen Ebene im Wesentlichen den gleichen Winkel ein wie der Steilförderabschnitt 4. Darüber hinaus ist die Erstreckung des Antriebs 9 in Förderrichtung 10 größer als im Ausführungsbeispiel, das in Fig. 1 gezeigt ist.

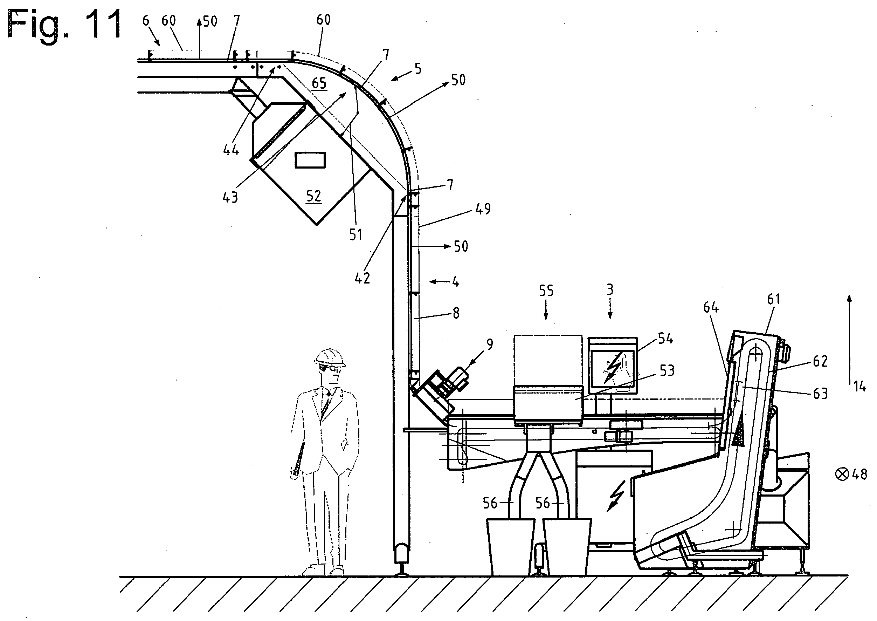

Fig. 11 zeigt analog zur Fig. 1 eine weitere alternative Ausführungsform, wobei der Antrieb 9 auch hier vor dem Steilförderabschnitt 4 positioniert ist. Im Unterschied zum Ausführungsbeispiel der Fig. 1 ist der Antrieb jedoch nicht horizontal angeordnet, sondern schließt mit der horizontalen Ebene einen Winkel ein, der größer als 0° und kleiner als jener Winkel, der vom Steilförderabschnitt 4 mit der horizontalen Ebene eingeschlossen wird, ist.

Die Anordnung des Antriebs 9 gemäß Fig. 10 oder Fig. 11 erweist sich insbesondere dann von Vorteil, wenn extrem große oder sehr große Höhenunterschiede überwunden werden müssen. Dies deshalb, da bei einer zu großen vertikalen Strecke nach dem Antrieb 9 der Gewichtsdruck der in den Steilförderabschnitt 4 gedrückten Behälterverschlüsse 57 so groß wird, dass die Behälterverschlüsse 57 am in Förderrichtung 10 gesehenen Ende des Antriebs 9 deformiert werden.

### BEZUGSZEICHENLISTE

- 1: Vorratsbehälter
- 2: Übergabestation
- 3: Prüfabschnitt
- 4: Steilförderabschnitt
- 5: Übergangsabschnitt
- 6: Flachförderabschnitt
- 7: Förderoberfläche
- 8: Förderkanal
- 9: Antrieb
- 10: Förderrichtung
- 11: Erster Einzugsriemen
- 12: Zweiter Einzugsriemen
- 13: Spiegelebene
- 14: Normalrichtung
- 15: Vorsprung
- 16: Erste Riemenscheibe
- 17: Zweite Riemenscheibe
- 18: Erste Drehrichtung
- 19: Zweite Drehrichtung
- 20: Drehachse
- 21: Erste Riemenscheibenachse
- 22: Zweite Riemenscheibenachse
- 23: Erste Lagerbacke
- 24: Zweite Lagerbacke
- 25: Riemenscheibenantriebseinheit
- 26: Rahmen
- 27: Der Spiegelebene zugewandte Fläche einer Lagerbacke
- 28: Keilförmige Öffnung
- 29: Keil
- 30: Stellschraube
- 31: Grundfläche der ersten Lagerbacke
- 32: Grundfläche der zweiten Lagerbacke
- 33: Deckfläche der ersten Lagerbacke
- 34: Deckfläche der zweiten Lagerbacke
- 35: Erste Antriebsscheibe
- 36: Zweite Antriebsscheibe
- 37: Zentralantriebsscheibe
- 38: Erster Antriebsriemen
- 39: Zweiter Antriebsriemen
- 40: Elektromotor
- 41: Antriebswelle
- 42: Anfangsbereich des Übergangsabschnitts
- 43: Mittelbereich des Übergangsabschnitts
- 44: Endbereich des Übergangsabschnitts
- 45: Erste Seite
- 46: Zweite Seite
- 47: Seitenwand
- 48: Breitenrichtung
- 49: Förderkanaldecke
- 50: Höhenrichtung
- 51: Erstes Luftleitblech
- 52: Drucklufteinheit
- 53: CCD-Kamera
- 54: Auswerteeinheit
- 55: Ausleitungsabschnitt
- 56: Ausleitungskanal
- 57: Behälterverschluss
- 58: Sicherungsabschnitt
- 59: Kontaktoberfläche
- 60: Decke
- 61: Sortiersteilförderer
- 62: Kette
- 63: Führungsbahn
- 64: Deckel des Sortiersteilförderers
- 65: Luftkanal
- 66: Zugfeder
- 67: Schräge
- 68: Erster Grundblock
- 69: Zweiter Grundblock
- 70: Erster Gleitblock
- 71: Zweiter Gleitblock
- 72: Druckfeder
- 73: Einzugsriemenrückseite
- 74: Kugellagerung

## Patentansprüche

1. Förderabschnitt in einer Vorrichtung zum Vereinzeln und Lageausrichten von Behälterverschlüssen (57) sowie zum Befördern der Behälterverschlüsse (57) zu einer Weiterverarbeitungsmaschine, vorzugsweise Verschließmaschine, umfassend eine Förderoberfläche (7), einen Steilförderabschnitt (4), einen Übergangsabschnitt (5) mit einem Anfangs- (42), Mittel- (43) und Endbereich (44) sowie einen Flachförderabschnitt (6), wobei der Steilförderabschnitt (4) als Förderkanal (8) ausgeführt ist und mit der horizontalen Ebene einen Winkel von mindestens 30°, vorzugsweise mindestens 80°, besonders bevorzugt im Wesentlichen 90° einschließt, wobei die Behälterverschlüsse (57) mittels eines Antriebs (9) der in einer Förderrichtung (10) gesehen vor dem Förderkanal (8) angeordnet ist, durch den Förderkanal (8) bis in den Übergangsabschnitt (5), vorzugsweise bis in den Mittelbereich (43) des Übergangsabschnitts (5) schiebbar bzw. drückbar sind, **dadurch gekennzeichnet, dass** der Förderabschnitt zusätzlich einen Prüfabschnitt (3) mit. Prüfmittel (53, 54) zur Prüfung der Behälterverschlüsse (57) auf deren Artrichtigkeit und/oder Unversehrtheit umfasst, wobei der Prüfabschnitt (3) in Förderrichtung (10) gesehen vor dem Antrieb (9) angeordnet ist.

2. Förderabschnitt nach Anspruch 1, **dadurch gekennzeichnet, dass** der Förderabschnitt zusätzlich weiters einen Ausleitungsabschnitt (55) zur Ausleitung artfalscher und/oder defekter Behälterverschlüsse (57) umfasst, wobei der Ausleitungsabschnitt (55) nach dem Prüfabschnitt (3) angeordnet ist.

3. Förderabschnitt nach Anspruch 2, **dadurch gekennzeichnet, dass** der Ausleitungsabschnitt (55) zwei Ausleitungskanäle (56) zur Ausleitung artfalscher Behälterverschlüsse (57) einerseits und zur Ausleitung defekter Behälterverschlüsse (57) andererseits umfasst.

## Claims

1. A conveying section in an apparatus for separating and aligning the position of container closures (57) and for transporting the container closures (57) to a machine for further processing, preferably a sealing machine, comprising a conveying surface (7), a steep conveying section (4), a transition section (5) having a starting region (42), a middle region (43), and an end region (44), as well as a flat conveying section (6), wherein the steep conveying section (4) is formed as a conveying channel (8) and encloses with the horizontal plane an angle of at least 30°, preferably at least 80°, more preferably substantially 90°, wherein the container closures (57) can be pushed or pressed through the conveying channel (8) into the transition section (5), preferably into the middle region (43) of the transition section (5), by means of a drive (9) that is arranged before the conveying channel (8) as viewed in the conveying direction (10), **characterized in that** the conveying section additionally comprises a testing section (3) with testing means (53, 54) for testing the container closures (57) with respect to their correct type and/or integrity, wherein the testing section (3) is arranged before the drive (9) as viewed in the conveying direction (10).

2. A conveying section according to claim 1, **characterized in that** the conveying section additionally further comprises a discharge section (55) for discharging container closures (57) which are of the wrong type and/or defective, wherein the discharge section (55) is arranged after the testing section (3).

3. A conveying section according to claim 2, **characterized in that** the discharge section (55) comprises two discharge channels (56) for discharging container closures (57) of the wrong type on the one hand and for discharging defective container closures (57) on the other hand.

## Revendications

1. Section de transport dans un dispositif pour séparer et orienter en position des fermetures de récipients (57) et transporter les fermetures de récipients (57) vers une machine de traitement, de préférence une machine de fermeture, comprenant une surface de transport (7), une section de transport à forte pente (4), une section de transition (5) avec des parties de début (42), de milieu (43) et d'extrémité (44), ainsi qu'une section de transport à faible pente (6), dans laquelle la section de transport à forte pente (4) est réalisée comme une goulotte de transport (8) et forme avec le plan horizontal un angle d'au moins 30°, de préférence d'au moins 80°, en particulier de sensiblement 90°, dans laquelle les fermetures de récipients (57) peuvent être poussées ou pressées à travers la goulotte de transport (8) au moyen d'un entraînement (9) disposé, vu dans le sens de transport (10), avant la goulotte de transport (8), jusque dans la section de transition (5), de préférence dans la partie du milieu (43) de la section de transition (5), **caractérisée en ce que** la section de transport comprend en outre une section de contrôle (3) avec des moyens de contrôle (53, 54) pour le contrôle du type correct et/ou du bon état des fermetures de récipients (57), la section de contrôle (3) étant disposée, vu dans le sens de transport (10), avant l'entraînement (9).

2. Section de transport selon la revendication 1, **caractérisée en ce qu'**elle comprend en outre une section d'évacuation (55) pour l'évacuation des fermetures de récipients (57) de type incorrect et/ou défectueuses, la section d'évacuation (55) étant disposée après la section de contrôle (3).

3. Section de transport selon la revendication 2, **caractérisé en ce que** la section d'évacuation (55) comprend deux canaux d'évacuation (56) pour évacuer, d'une part, les fermetures de récipients (57) de type incorrect, et d'autre part les fermetures de récipients (57) défectueuses.
